Europäisches Patentamt

European Patent Office

Office européen des brevets

(11) Veröffentlichungsnummer: **0 369 232**
**A2**

(12) **EUROPÄISCHE PATENTANMELDUNG**

(21) Anmeldenummer: 89120093.3

(22) Anmeldetag: 30.10.89

(51) Int. Cl.5: **B23Q 39/02**

(30) Priorität: 14.11.88 DE 8814245 U

(43) Veröffentlichungstag der Anmeldung:
23.05.90 Patentblatt 90/21

(84) Benannte Vertragsstaaten:
CH DE ES FR GB IT LI

(71) Anmelder: MAHO Aktiengesellschaft
Postfach 1280 Tiroler Strasse 85
D-8962 Pfronten(DE)

(72) Erfinder: Grund, Peter, Dr.-Ing.
Bergblickstrasse 13
D-8959 Rieden(DE)

(74) Vertreter: Patentanwälte Beetz sen. - Beetz
jun. Timpe - Siegfried - Schmitt-Fumian-
Mayr
Steinsdorfstrasse 10
D-8000 München 22(DE)

(54) Werkzeugmaschine.

(57) Gegenstand der Erfindung ist eine Werkzeugmaschine, bestehend aus einem Ständer (1) für ein in der horizontalen Z-Achse und in der vertikalen Y-Achse verfahrbares Spindelgehäuse (5) mit zumindest einer horizontalen Arbeitsspindel (6) und aus einem formsteifen Bett (7) mit Führungen (8) für einen in der horizontalen X-Achse verfahrbaren Werkstücktisch (10). Um eine gleichzeitige Fräs- und Drehbearbeitung mehrerer Werkstücke zu ermöglichen, weist die erfindungsgemäße Werkzeugmaschine eine komplette Fräs-Einheit und daneben auf dem Maschinenbett eine komplette Dreh-Einheit auf. Seitlich neben dem Werkstücktisch (9) der Fräs-Einheit ist auf den Führungen (8) des Bettes (7) eine eigenständig drehangetriebene Vorrichtung (14, 15) zum Einspannen von horizontal ausgerichteten Werkstücken und daneben ein mit Drehmessern besetzter Revolverkopf einzeln verfahrbar angeordnet.

## Werkzeugmaschine

Die Erfindung betrifft eine Werkzeugmaschine zur Fräs- und Dreh-Bearbeitung von Werkstücken, bestehend aus einem Ständer für ein in der horizontalen Z-Achse und in der vertikalen Y-Achse verfahrbares Spindelgehäuse mit einer horizontalen Arbeitsspindel und aus einem formsteifen Bett mit Führungen für einen in der horizontalen X-Achse verfahrbaren Werkstück-Drehtisch.

Nach den praktischen Erfahrungen der Anwender von komplexen Werkzeugmaschinen muß ein Großteil der Werkstücke gefräst und gedreht werden, was auf jeweils gesonderten kompletten Fräsmaschinen und Drehbänken mit jeweils eigener Programmsteuerung geschieht. Abgesehen von dem dadurch notwendigen hohen Investitionsaufwand kann die optimale Verknüpfung der unterschiedlichen Maschinentypen zur Erzielung eines flexiblen Bearbeitungsablaufes Schwierigkeiten bereiten.

Daneben sind bereits auch Bearbeitungszentren bekannt, mit denen ein Werkstück in einer Einspannung wechselweise gefräst und gedreht werden kann. Bei diesen Maschinen handelt es sich jedoch entweder um Fräsmaschinen mit Zusatzeinrichtungen für eine Drehbearbeitung oder um Drehbänke mit entsprechenden Zusatzeinrichtungen zum Fräsen. Die jeweils vorgesehenen Zusatzeinrichtungen sind naturgemäß weniger leistungsstark als die Haupteinheiten der Maschine, was wiederum den Anwendungsbereich auf bestimmte Werkstücke beschränkt. Darüber hinaus ist eine parallele Fräs-bzw. Dreh-Bearbeitung an gesonderten Werkstücken nicht möglich.

Aufgabe der Erfindung ist es, eine Werkzeugmaschine zu schaffen, die eine gleichrangige parallele Dreh- und Fräs-Bearbeitung zweier Werkstücke ermöglicht.

Diese Aufgabe wird erfindungsgemäß dadurch gelöst, daß auf den Führungen des Betts seitlich neben dem Werkstücktisch für die Fräs-Bearbeitung eine Einheit zur Drehbearbeitung vorgesehen ist, die eine eigenständig drehangetriebene Vorrichtung zum Einspannen von horizontal ausgerichteten Werkstücken und einen gesonderten mit Drehmessern besetzten Revolverkopf enthält, welche auf den Führungen des Betts einzeln verfahrbar sind.

Die erfindungsgemäß ausgebildete Werkzeugmaschine stellt eine räumliche Zusammenfassung einer kompletten Fräsmaschine und einer Drehbank dar und ermöglicht die parallele gleichzeitige Bearbeitung von jeweils zwei unterschiedlichen Werkstücken unter Verwendung eines einzigen durchgehenden Maschinenbetts.

Ein besonderer Vorzug der erfindungsgemäßen Werkzeugmaschine besteht noch darin, daß statt der zusätzlichen Einheit zur Drehbearbeitung der Werkstücke auch andere Bearbeitungseinheiten, z. B. Schleifeinheiten, Laser-Einheiten od. dgl., auf dem Maschinenbett montiert werden können. Insbesondere das Vorsehen einer Laser-Bearbeitungseinheit eröffnet die Möglichkeit, bestimmte Bearbeitungsvorgänge auch bei dem auf den Werkstücktisch der Fräs-Einheit aufgespannten Werkstück vorzunehmen.

Die Zufuhr der Werkstücke zur Fräs-Einheit und zur Dreh-Einheit erfolgt zweckmäßig durch gesonderte Einrichtungen, und zwar beispielsweise durch Palettenwechsler für die Fräs-Einheit und durch ein Kettenmagazin für die Dreh-Einheit. Gemäß einer besonders zweckmäßigen Ausgestaltung der Erfindung kann die Beschickung der Fräs-Einheit und der Dreh-Einheit auch von einem gemeinsamen Werkstückmagazin bzw. Werkstückspeicher aus erfolgen, und zwar mit Hilfe einer Übergabevorrichtung, deren verfahrbare Werkstück-Greifer die Fräs-Einheit und auch die Dreh-Einheit bedienen. Darüber hinaus sind je ein Werkzeugmagazin für die Fräs-Einheit und für die Dreh-Einheit vorgesehen.

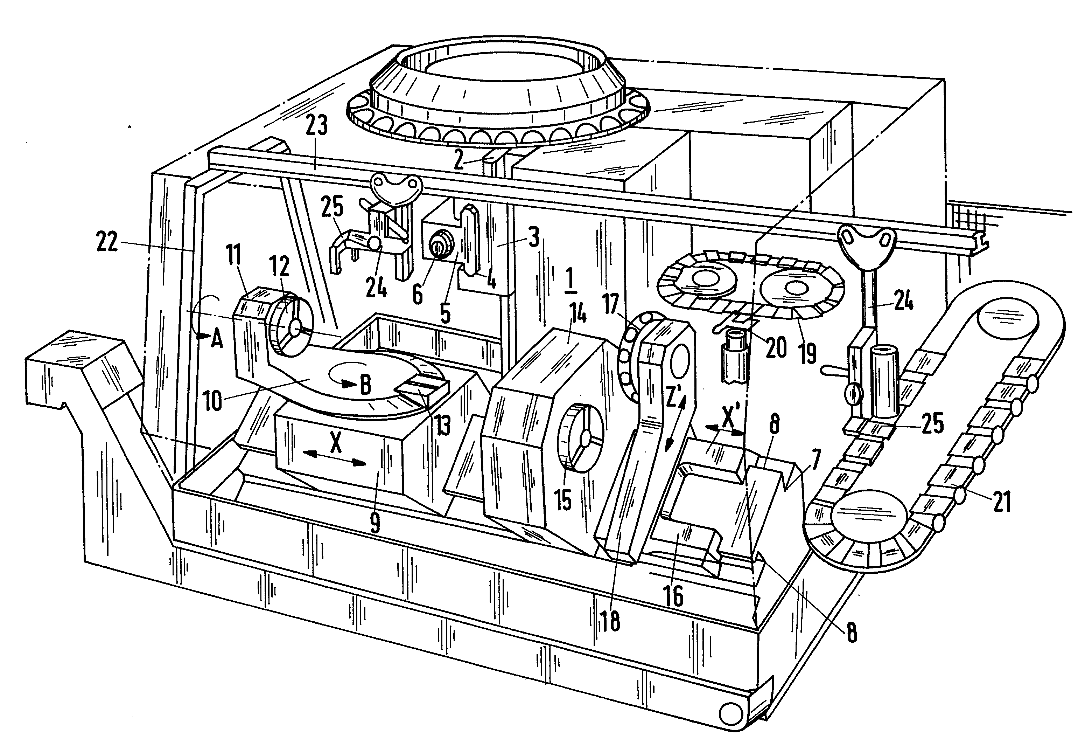

Im folgenden wird ein Ausführungsbeispiel der Erfindung anhand der Zeichnung im einzelnen beschrieben.

Die dargestellte Werkzeugmaschine enthält einen formsteifen Ständer 1 mit Vertikalführungen 2 an einer Seitenwand zur Halterung einer Konsole 3, in deren Horizontalführungen 4 ein Spindelgehäuse 5 mit Horizontalspindel 6 verschiebbar geführt ist.

An der Stirnseite des Ständers 1 ist ein formsteifes Maschinenbett 7 angeordnet, das an seiner schräg nach vorn weisenden Oberseite durchgehende Längsführungen 8 aufweist. Auf der linken Seite des Bettes 7 ist eine Tischkonsole 9 in den Längsführungen in Richtung der horizontalen X-Achse verfahrbar montiert, die auf ihrer horizontalen Oberseite einen um die vertikale B-Achse verdrehbaren Werkstücktisch 10 trägt. Dieser Werkstücktisch 10 weist an seiner einen Seite einen angeformten Spannblock 11 mit horizontaler Durchgangsöffnung und Spannmitteln 12 zur Fixierung eines rotationssymmetrischen Werkstücks mit horizontaler Achse auf. Im Block 11 sind - nicht dargestellte - Antriebsmittel für eine Rotation der Spannelemente 12 um die horizontale A-Achse angeordnet. An der diametral gegenüberliegenden Seite des Werkstücktisches 10 ist eine Montageplattform 13 zur Befestigung eines - nicht dargestellten - Gegenhalters für die in den Spannelementen 12 eingespannten längeren Werkstücke vorgesehen.

Neben der Tischkonsole 9 ist auf den Führungen 8 des Bettes 7 ein Block 14 mit einem - nicht dargestellten -integrierten Antrieb für eine Werkstück-Spannvorrichtung 15 in Richtung der X-Achse verschiebbar angeordnet. Seitlich neben diesem Block 14 befindet sich eine an den Führungen 8 verschiebbare Konsole 16, auf welcher ein Revolverkopf 17 mittels eines in Richtung des Doppelpfeiles Z' verfahrbaren Trägers angeordnet ist. Dem Revolverkopf 17 ist ein Werkzeugmagazin 19 mit einem Werkzeugwechsler 20 zugeordnet.

Zur Beschickung des Werkstücktisches 10 der Fräseinheit und der Spannvorrichtung 15 im Block 14 der Dreh-Einheit mit Werkstücken ist an der einen Stirnseite der Maschine ein Magazin 21 vorgesehen. Eine Übergabevorrichtung besteht aus einem - lediglich an der linken Seite dargestellten - Gestell 22 und einer horizontalen Führungsschiene 23, die sich oberhalb des Magazins 21, der Dreh-Einheit 14, 17 und der Fräs-Einheit 10, 12 erstreckt. An dieser Führungsschiene 23 sind Greifeinrichtungen 24 längsverfahrbar montiert, deren Greifer 25 - wie an der rechten Seite dargestellt - nach vertikal unten ausfahren und ein Werkstück erfassen können. Die Greifer sind verschwenkbar montiert, um ein Einspannen der Werkstücke auf dem Drehtisch 10, im Werkstück-Block 11 und in den Spannmitteln des Blockes 14 zu ermöglichen.

## Ansprüche

1. Werkzeugmaschine, bestehend
aus einem Ständer für ein in der horizontalen Z-Achse und in der vertikalen Y-Achse verfahrbares Spindelgehäuse mit zumindest einer horizontalen Arbeitsspindel und
aus einem formsteifen Bett mit Führungen für einen in der horizontalen X-Achse verfahrbaren Werkstücktisch,
**dadurch gekennzeichnet,**
daß auf den Führungen (8) des Bettes (7) seitlich neben dem Werkstücktisch eine zusätzliche Einheit (14, 17) zur Drehbearbeitung von Werkstücken ausgebildet ist, die eine eigenständig drehangetriebene Vorrichtung (15) zum Einspannen von horizontal ausgerichteten Werkstücken und einen mit Drehmessern besetzten gesonderten Revolverkopf (17) enthält, welche auf den Führungen (8) des Bettes (7) einzeln verfahrbar sind.

2. Werkzeugmaschine nach Anspruch 1,
dadurch gekennzeichnet,
daß die durchgehenden Führungen (8) auf dem Bett (7) unter einem Winkel mit schräg nach vorn weisender Tragfläche angeordnet sind.

3. Werkzeugmaschine nach Anspruch 1 oder 2,
dadurch gekennzeichnet,
daß dem Revolverkopf (17) der Dreh-Einheit ein eigenes Werkzeugmagazin (19) mit einem Wechsler (20) zugeordnet ist.

4. Werkzeugmaschine nach einem der Ansprüche 1 bis 3,
dadurch gekennzeichnet,
daß ein gemeinsamer Werkstückspeicher (21) und eine gemeinsame Übergabevorrichtung (22 bis 25) für die Bedienung der Fräs-Einheit und der Dreh-Einheit vorgesehen ist.

5. Werkzeugmaschine nach Anspruch 4,
dadurch gekennzeichnet,
daß die Übergabevorrichtung ein Gestell (22) mit einer horizontalen Tragschiene (23) enthält, an der um mehrere Achsen bewegbare Greifvorrichtungen (24, 25) für den Transport der Werkstücke verfahrbar angehängt sind.